# EUROPÄISCHE PATENTSCHRIFT

(11) **EP 3 274 669 B1**
(45) Veröffentlichungstag und Bekanntmachung des Hinweises auf die Patenterteilung: **06.05.2020**
(21) Anmeldenummer: 16706978.0
(22) Anmeldetag: 02.03.2016
(51) Int. Cl.: G01G 21/23

(54) **WAAGE MIT LASTWECHSELEINRICHTUNG UND VERFAHREN ZU DEREN BETRIEB**
BALANCE HAVING A LOAD CHANGE DEVICE AND METHOD FOR OPERATING SAID BALANCE
BALANCE ÉQUIPÉE D'UN DISPOSITIF DE CHANGEMENT DE CHARGES ET SON PROCÉDÉ DE FONCTIONNEMENT

(30) Priorität: 27.03.2015 DE 102015104693
(43) Veröffentlichungstag der Anmeldung: 31.01.2018
(73) Patentinhaber: Sartorius Lab Instruments GmbH & Co. KG, 37079 Göttingen (DE)
(72) Erfinder: FRÖHLICH, Thomas, 98693 Illmenau (DE); MÜHLICH, Sigo, 37120 Bovenden (DE); HILBRUNNER, Falko, 98693 Ilmenau (DE); FEHLING, Thomas, 37218 Witzenhausen (DE); SCHREIBER, Mario, 07607 Gösen (DE)
(74) Vertreter: Vigand, Philippe
(86) Internationale Anmeldenummer: PCT/EP2016/000355
(87) Internationale Veröffentlichungsnummer: WO 2016/155864

(56) Entgegenhaltungen:
- DE-A1- 4 023 483
- DE-A1-102005 005 366
- DE-U1- 29 607 731

## Beschreibung

### Gebiet der Erfindung

Die Erfindung bezieht sich auf eine Waage mit Lastwechseleinrichtung, wobei die Lastwechseleinrichtung einen horizontal bewegbar gelagerten Magazintisch mit einer Mehrzahl von gruppenweise angeordneten Vertikaldurchbrüchen aufweist und die Waage eine Wägezelle und eine Lastaufnahme mit einer zu jeder Durchbruchsgruppe des Magazintischs korrespondierenden Trägeranordnung aufweist und wobei der Magazintisch und die Waage relativ zueinander höhenverstellbar sind, sodass in einer Wägeposition eine über der Lastaufnahme positionierte Durchbruchsgruppe des Magazintischs von der Trägeranordnung der Lastaufnahme durchgriffen und in einer Wechselposition die Trägeranordnung der Lastaufnahme tiefer als die Vertikaldurchbrüche des Magazintischs positioniert ist.

Die Erfindung bezieht sich weiter auf ein Verfahren zum Betrieb einer derartigen Vorrichtung.

### Stand der Technik

Gattungsgemäße Waagen mit Lastwechseleinrichtung sind in der DE 296 07 731 U1 im Rahmen der dortigen Diskussion des Standes der Technik offenbart. Diese Druckschrift offenbart Komparatorwaagen, deren primäre Aufgabe es ist, nacheinander für eine Mehrzahl von Prüfgewichten einen Gewichtswert zu ermitteln und diesen mit einem entsprechend ermittelten Gewichtswert eines Referenzgewichtes zu vergleichen. Hierbei kommt es nicht auf die Bestimmung der absoluten Masse der Prüfgewichte an, sondern lediglich auf die Differenz zur Absolutmasse des Referenzgewichtes. Auch die vorliegende Erfindung betrifft in erster Linie derartige Komparatorwaagen, ist jedoch auch ohne weiteres für allgemeine Wägeeinrichtungen einsetzbar, bei denen die Absolutmassenbestimmung im Vordergrund steht.

Aus der DE 40 23 483 A1 ist eine Vorrichtung zur Trockensubstanzbestimmung bekannt, die mit einer als Laswechselvorrichtung wirkenden Drehscheibe mehrere Probengefäße aufnehmen und im Zusammenwirken mit einer Hubvorrichtung auf der Waagschale einer Waage ablegen kann.

Die Waage der bekannten Vorrichtung umfasst eine Wägezelle, bestehend aus einem mechanischen Wägesystem und einer entsprechenden Regelelekronik, üblicherweise integriert in einem Gehäuse, sowie eine oberschalige Lastaufnahme, die mit einem Lasteinleitungselement des Wägesystems gekoppelt ist. Oberhalb der Waage ist ein Drehteller angeordnet, der im Wesentlichen als Prüfgewichtsmagazin dient. Auf ihm werden, über seinen Umfang verteilt, die Prüfgewichte an vorgegebenen Positionen abgestellt, sodass sie durch Rotation des Drehtellers in eine Position exakt oberhalb der Lastaufnahme der Waage gefahren werden können. Zusätzlich zu seiner Drehbewegbarkeit ist der Drehteller gegenüber einer mit der Waage gemeinsamen Basis höhenverstellbar. Durch Absenken des Drehtellers kann das über der Lastaufnahme positionierte Prüfgewicht auf die Lastaufnahme zu abgesenkt werden, wobei eine fingerartige Trägeranordnung der Lastaufnahme durch korrespondierende Vertikaldurchbrüche im Drehteller hindurchgreift und beim weiteren Absenken des Drehtellers das Prüfgewicht gegen die Gravitationskraft abstützt. Die Last des Prüfgewichtes lastet somit auf der Lastaufnahme und kann über das Lasteinleitungselement in das Wägesystem eingekoppelt werden, sodass die Waage einen Gewichtswert für ein Prüfgewicht ermitteln kann. Die spezielle Gestaltung der Trägeranordnung der Lastaufnahme und der Vertikaldurchbrüche des Drehtellers ist in der genannten Druckschrift nicht offenbart. Es sind dem Fachmann jedoch etliche Ausgestaltungen bekannt, die sämtlich auch im Rahmen der vorliegenden Erfindung Einsatz finden können. So können Trägeraufnahme und Vertikaldurchbrüche bspw. in Form horizontal ausgerichteter Gabeln mit intermittierenden Zinken ausgebildet sein. Ebenso kann die Trägeranordnung vertikal gerichtete Tragfinger aufweisen, die umschlossene Löcher im Drehteller durchgreifen.

Nachteilig bei der bekannten Vorrichtung ist der hohe Aufwand, der zur Lagerung des Drehtellers getrieben werden muss. Zur präzisen Reproduzierbarkeit der Positionierung der Prüfgewichte ist es erforderlich, dass jegliches Spiel des Drehtellers insbesondere ein Verkippungsspiel, minimiert wird. Gleichzeitig jedoch muss der Drehteller reibungsarm sowohl rotativ als auch in vertikaler Richtung linear bewegbar sein. Hier eine weitestgehende Spielfreiheit bei gleichzeitig reibungsarmer Bewegbarkeit in zwei Bewegungsrichtungen zu erreichen, stellt lagertechnisch extrem hohe Anforderungen, die sich in hohen Kosten der Vorrichtung niederschlagen.

Eine präzise und reproduzierbare Positionierung der Prüfgewichte ist aus verschiedenen Gründen notwendig. Aus metrologischer Sicht ist eine exakte Positionierung erforderlich, um die geforderten Unsicherheiten bei der Massebestimmung einzuhalten. Exzentrische Belastungen des Wägesystems führen zu sogenannten Ecklastfehlern. Diese können zwar durch spezielle Zusatzbaugruppen zur automatischen Zentrierung der Prüfgewichte reduziert werden, aber auch hier ist eine reproduzierbare Positionierung durch den Lastwechsler eine notwendige Voraussetzung für Massevergleiche mit geringer Messunsicherheit.

Aber auch aus Gründen des Gewichtshandlings ist eine exakte Positionierung des Prüfgewichte notwendig. Werden die Prüfgewichte aufgrund schlechter Justage oder Spiel in den Führungen des Lastwechslers beispielsweise nicht parallel auf die Waagschale übergeben, so können Abnutzungserscheinungen der Prüfgewichte und seitliches Auswandern die Folge sein.

### Aufgabenstellung

Es ist die Aufgabe der vorliegenden Erfindung, eine gattungsgemäße Vorrichtung derart weiterzubilden, dass bei reduzierten Anforderungen an die Drehteller-Lagerung eine verbesserte Präzision der Prüfgewichtspositionierung erzielt wird.

### Darlegung der Erfindung

Diese Aufgabe wird in Verbindung mit den Merkmalen des Oberbegriffs von Anspruch 1 dadurch gelöst, dass der Magazintisch relativ zu einer Basis höhenfest gelagert und die Waage relativ zu der Basis höhenverstellbar ist, wobei der Hub der Waage durch einen relativ zu der Basis höhenfesten Anschlag nach oben begrenzt ist.

Bevorzugte Ausführungsformen der Erfindung sind Gegenstand der abhängigen Patentansprüche. Bevorzugte Verfahren zum Betrieb einer erfindungsgemäßen Vorrichtung sind Gegenstand der unabhängigen Verfahrensansprüche.

Grundsätzlich kann der Magazintisch auf unterschiedliche Weise ausgebildet sein. Bei einer ersten Variante der Erfindung ist vorgesehen, dass der Magazintisch als eine horizontal linearverschieblich gelagerte Verschiebebühne ausgebildet ist, über deren Fläche verteilt die Durchbruchsgruppen angeordnet sind. Bevorzugt ist jedoch der Magazintisch als ein horizontal rotierbar gelagerter Drehteller ausgebildet, über dessen Umfang verteilt die Durchbruchsgruppen angeordnet sind. Diese Variante ist Gegenstand der nachfolgenden Erläuterungen, wobei der Fachmann diese *mutatis mutandis* ohne Weiteres auch auf die Verschiebebühnen-Variante übertragen kann.

Zunächst kehrt die vorliegende Erfindung die Kinematik des Standes der Technik teilweise um. Insbesondere wird die Relativbewegung von Waage und Drehteller in vertikaler Richtung vom Drehteller (Stand der Technik) auf die Waage (Erfindung) verlagert. Die rotative Relativbewegung von Waage und Drehteller bleibt hingegen allein dem Drehteller zugeordnet. Von einer gemeinsamen Basis aus gesehen, wird also zur Übergabe eines Prüfgewichtes vom Drehteller auf die Lastaufnahme nicht mehr der Drehteller auf die Waage zu abgesenkt, sondern vielmehr die Waage zum Drehteller hin angehoben. Hierdurch wird bereits eine erste Vereinfachung der Lagertechnik bewirkt, da für jedes der beiden gegenüber der Basis bewegbaren Elemente nur eine einfache, d.h. eine Bewegung mit nur einer Bewegungskomponente zulassende Lagerung erforderlich ist. Derartige, einfache Lagerungen können mit deutlich geringerem Aufwand sehr viel präziser gefertigt werden als komplexe, d.h. Bewegungen mit mehreren Bewegungskomponenten zulassende Lagerungen. Statt einer Lagerung mit zwei Freiheitsgraden erfordert die Erfindung somit zwei Lagerungen mit jeweils einem Freiheitsgrad.

Allerdings erschöpft sich die Erfindung noch nicht in dem vorgenannten Ansatz. Die Systempräzision wird weiter dadurch verbessert, dass die höhenverstellbare Waage gegen einen Anschlag gefahren wird, sodass es aufgrund des Kraftschlusses zwischen dem relativ zur Basis höhenfesten Anschlag und einem relativ zur Waage höhenfesten Gegenanschlag zu einer vollkommenen Unterdrückung des Spiels der Waagen-(Höhen-) Verstellung kommt. Das einzige nicht unterdrückte Spiel der erfindungsgemäßen Vorrichtung liegt also in der rotativen Lagerung des Drehtellers, wobei dem Fachmann etliche Lösungen der quasi spielfreien Drehteller- bzw., allgemeiner, Magazintischlagerung bekannt sind. Bspw. können hier Präzisions-Kugellager, Präzisions-Nadel oder -Kegellager, Präzisions-Gleitlager oder Ähnliches zum Einsatz kommen. Auch der Einsatz federvorgespannter Präzisions-Lager ist in diesem Zusammenhang zur Erzielung einer völligen Spielfreiheit möglich und in vielen Fällen sogar besonders bevorzugt. Von besonderem Vorteil ist es dabei, keine statisch überbestimmten Lagersysteme einzusetzen, sondern statisch bestimmte 3-Punkt-Lager.

Wo exakt sich der relativ zur Basis höhenfeste Anschlag befindet, ist für die Erfindung weitgehend ohne Belang. Denkbar ist die Anordnung an einem den Drehteller tragenden Gestell, welches auf einer Basis fixiert ist, die auch der Höhenverstellung der Waage als Basis dient. Alternativ ist selbstverständlich auch das Vorsehen eines eigenen Anschlaggestells auf besagter Basis möglich. In jedem Fall ist der Anschlag günstigerweise als Drei-Punkt-Anschlag ausgebildet, womit stets eine kippfreie Anlage gewährleistet ist. Besonders bevorzugt ist eine Ausgestaltung des Anschlags in der sog. Hütchen/Schnittchen/Plättchen-Form, bei der ein erstes Anschlagselementen-Paar als Kegel/Hohlkegel-Paar, ein zweites als Schneide/Hohlkehle-Paar und ein drittes als Platte/Dorn- oder Platte/Kugel-Paar ausgebildet ist. Die genaue Ausgestaltung und Anordnung des Gegenanschlags ist für die Erfindung weitgehend ohne Belang. So ist bspw. denkbar, ihn unmittelbar am Gehäuse der Wägezelle anzuordnen. Alternativ ist es jedoch auch möglich, die Wägezelle auf einer Art Hebebühne anzuordnen und den Gegenanschlag an der Hebebühne zu fixieren. Der Fachmann wird verstehen, dass Anschlag und Gegenanschlag in ihrer Form und Position aufeinander abgestimmt sein müssen.

Es kann vorgesehen sein, dass der Anschlag oder der Gegenanschlag mit einer Kraftmesseinrichtung, bevorzugt an einem der Anschlagselemente-Paare, besonders bevorzugt an dem Platte/Dorn- bzw. PlatteKugel-Paar, versehen ist. Hiermit lässt sich die Kraft ermitteln, mit welcher der Gegenanschlag gegen den Anschlag gepresst wird. Dies ist für eine präzise und reproduzierbare Höhenverstellung der Waage von besonderem Vorteil. In jedem Fall ist es erforderlich, dass der Hubmechanismus der Waageeine Kraft aufzubringen vermag, die größer ist als die Summe der auf der Höhenverstellung der Waage lastenden Gewichtskräfte (einschließlich des Prüfgewichts). Nur dann nämlich kann in Wägestellung jegliches Spiel der Höhenverstellung als zuverlässig unterdrückt angesehen werden. Andererseits ist es aus Gründen der wirtschaftlichen Systemauslegung günstig, die auftretenden Kräfte so gering wie möglich zu halten. Insofern würde es genügen, wenn in Wägestellung, d.h. bei hochgefahrener Stellung der Waage und aufliegendem Gewicht, nach eine geringe Anpresskraft zwischen Anschlag und Gegenanschlag anliegt. Besonders bevorzugt ist diese unabhängig von der Größe des aufgelegten Gewichtes. Hierzu soll weiter unten weiter ausgeführt werden.

Selbstverständlich ist es möglich, die Höhenverstellung der Waage manuell zu vollziehen. Im Hinblick auf eine weitgehende Automatisierung des Systems wird jedoch bevorzugt, wenn die Waage auf einer ersten motorischen Hubeinrichtung angeordnet oder mit einer solchen versehen ist. Die zuvor schon genannte Hebebühnen-Anordnung fällt dabei unter die erste Option, die zweite Option betrifft eine mit der Wägezelle selbst integrierte Hubeinrichtung.

Die erste motorische Hubeinrichtung ist vorzugsweise mit einer kraftgesteuerten Abschaltung versehen. Der Begriff der Abschaltung ist dabei weit zu verstehen und soll die Überführung in einen Zustand beschreiben, in dem die Hubeinrichtung keinen weiteren mechanischen Vorschub liefert, dabei jedoch die erreichte Anpresskraft zwischen Gegenanschlag und Anschlag im Wesentlichen konstant hält. Mit einer solchen kraftgesteuerten Abschaltung lässt sich die oben erläuterte optimale Anpresskraft (hinreichend groß, um zuverlässig jegliches Spiel zu unterbinden, gleichzeitig klein genug, um Lager etc. zu schonen und keine unnötige Energie zu verbrauchen) in reproduzierbarer Weise automatisch einstellen. Wird unabhängig von der Größe des aufgelegten Gewichtes stets bei derselben Anpresskraft abgeschaltet, erhöht dies auch die Zuverlässigkeit der Messergebnisse, da stets dieselben kraftbedingten Verwindungen, Stauchungen etc. der gesamten Mechanik auftreten.

Im Hinblick auf die möglichst weitgehende Automatisierung des erfindungsgemäßen Systems ist auch der Drehteller vorzugsweise mit einem motorischen Antrieb versehen. Dabei kann es sich bei einer bevorzugten Ausführungsform um einen motorischen, zentrischen Antrieb, seiner Spielfreiheit wegen insbesondere um einen Riemenantrieb handeln. Alternativ kann der Drehteller auch mit einem motorischen Umfangsantrieb versehen sein, der vorzugsweise nicht als ein Zahneingriffsantrieb, sondern seiner Spielfreiheit wegen als ein Reibradantrieb ausgebildet ist. Der besondere Vorteil des Umfangsantriebs besteht darin, dass der Zentralbereich unter dem Drehteller frei bleiben kann, so dass für die Waage und die Hubeinrichtung ein größerer Bauraum zur Verfügung steht. Ist jedoch die Minimierung der Außenabmessungen der erfindungsgemäßen Vorrichtung von besonderem Interesse, kann ein zentrischer Antrieb vorteilhaft sein.

Wie erläutert, besteht das Grundprinzip der Erfindung darin, dass die Waage mit ihrer Lastaufnahme von unten gegen das Prüfgewicht gefahren wird und dieses dabei von seiner Position auf dem Drehteller abhebt. Dies kann in ungünstigen Fällen zu vergleichsweise harten "Schlägen" auf das empfindliche Wägesystem der Wägezelle führen. Diese Gefahr besteht insbesondere, wenn eine Vielzahl von Prüfgewichten in möglichst schneller Abfolge verwogen werden sollen. Dies bedingt nämlich eine vergleichsweise schnelle Hubbewegung der Waage und damit entsprechend harte "Schläge" bei der Übergabe der Prüfgewichte. Um hier Abhilfe zu schaffen ist bei einer günstigen Weiterbildung der Erfindung vorgesehen, dass die Lastaufnahme gegenüber der Wägezelle mittels einer zweiten motorischen Hubeinrichtung höhenverstellbar ist, wobei sie in einer angehobenen Stellung von dem Wägesystem der Wägezelle entkoppelt und in einer abgesenkten Stellung mit dem Wägesystem der Wägezelle gekoppelt ist. Erfolgt die Übergabe des Prüfgewichtes bei vom Wägesystem entkoppelter Lastaufnahme, wird der dabei entstehende "Schlag" über die zweite Hubeinrichtung auf das Gehäuse der Wägezelle abgeleitet. Das empfindliche Wägesystem wird dabei umgangen. Erst im Anschluss wird dann die zweite Hubeinrichtung abgesenkt und die Kopplung der Lastaufnahme mit dem Lasteinleitungselement des Wägesystems vollzogen. Der vergleichsweise große Hub der Waage mittels der ersten Hubeinrichtung kann so mit vergleichsweise hoher Geschwindigkeit durchgeführt werden, wohingegen der geringe Hub der Lastaufnahme mittels der zweiten Hubeinrichtung ohne nennenswerten Zeitverlust langsam und die Kopplung der Lastaufnahme mit dem Wägesystem somit sanft erfolgen kann. Insgesamt ergibt sich eine deutliche Erhöhung der Messsicherheit gegenüber Systemen mit nur einer, nämlich der ersten Hubeinrichtung.

Bevorzugte Aspekte eines Verfahrens zum Betrieb einer erfindungsgemäßen Vorrichtung wurden bereits in den vorausgehenden Erläuterungen erkennbar. Gleichwohl stellt ein Verfahren, umfassend die Schritte:
- Bewegen des Magazintischs, insbesondere Rotieren des Drehtellers, bis ein ausgewähltes Prüfgewicht über der Lastaufnahme der sich in Wechselposition befindlichen Waage positioniert ist,
- Anheben der Waage bis zum Durchgriff der Trägeranordnung durch die dem Prüfgewicht zugeordnete Durchbruchsgruppe und zur Anlage der Trägeranordnung am Prüfgewicht,
- weiteres Anheben der Waage zusammen mit dem auf der Trägeranordnung ihrer Lastaufnahme aufliegenden Prüfgewicht bis zur Anlage des Anschlags an einem höhenfest zu der Waage fixierten Gegenanschlag,
- Ermitteln eines Gewichtswertes für das Prüfgewicht und
- Absenken der Waage in die Wechselposition,
eine eigenständige Erfindung dar.

Im Fall einer Ausgestaltung der erfindungsgemäßen Vorrichtung mit zwei Hubeinrichtungen umfasst das optimale Betriebsverfahren bevorzugt die Schritte:
- Bewegen des Magazintischs, insbesondere Rotieren des Drehtellers, bis ein ausgewähltes Prüfgewicht über der sich in ihrer mittels der zweiten motorischen Hubeinrichtung angehobenen Stellung befindlichen Lastaufnahme der sich in Wechselposition befindlichen Waage positioniert ist,
- Anheben der Waage bis zum Durchgriff der Trägeranordnung durch die dem Prüfgewicht zugeordnete Durchbruchsgruppe und zur Anlage der Trägeranordnung am Prüfgewicht,
- weiteres Anheben der Waage zusammen mit dem auf der Trägeranordnung ihrer Lastaufnahme aufliegenden Prüfgewicht bis zur Anlage des Anschlags an einem höhenfest zu der Waage fixierten Gegenanschlag,
- Überführen der Lastaufnahme, mittels der zweiten motorischen Hubeinrichtung, in ihre abgesenkte Stellung,
- Ermitteln eines Gewichtswertes für das Prüfgewicht und
- Absenken der Waage in die Wechselposition.

Der Fachmann wird verstehen, dass die Lastaufnahme vor einem erneuten Verfahrensdurchgang zu einem geeigneten Zeitpunkt wieder von dem Wägesystem entkoppelt werden, d.h. mittels der zweiten Hubeinrichtung rechtzeitig wieder in ihre angehobene Stellung überführt werden muss. Die Wahl des geeigneten Zeitpunktes ist jedoch nicht erfindungsrelevant und kann vom Fachmann in Ansehung der Erfordernisse des Einzelfalls vorgenommen werden.

Günstigerweise wird die erfindungsgemäße Vorrichtung als Komparator betrieben, d.h. es werden die erläuterten Verfahrensschritte in der dargestellten Reihenfolge zyklisch durchgeführt, wobei jeder ermittelte Gewichtswert eines Prüfgewichtes mit einem analog ermittelten Gewichtswert eines Referenzgewichtes verglichen wird. Bei der Verwiegung einer Vielzahl von Prüfgewichten ist es möglich, jeweils abwechselnd ein Prüfgewicht und das Referenzgewicht zu verwiegen, ebenso ist es möglich, die Prüfgewichte nacheinander zu verwiegen und mit einem vor und nach der Verwiegung der Prüfgewichte ermittelten Gewichtswert des Referenzgewichtes zu vergleichen. Selbstverständlich sind auch alle zwischen diesen beiden extremen liegenden Varianten denkbar.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematisierte Draufsicht auf eine erfindungsgemäße Vorrichtung,
- Figur 2:: eine Seitenansicht der Vorrichtung von Figur 2 in ihrer Wägeposition,
- Figur 3:: eine Seitenansicht der Vorrichtung von Figur 1 in ihrer Wechselposition.

### Ausführliche Beschreibung bevorzugter Ausführungsformen

Gleiche Bezugszeichen in den Figuren deuten auf gleiche oder analoge Elemente hin.

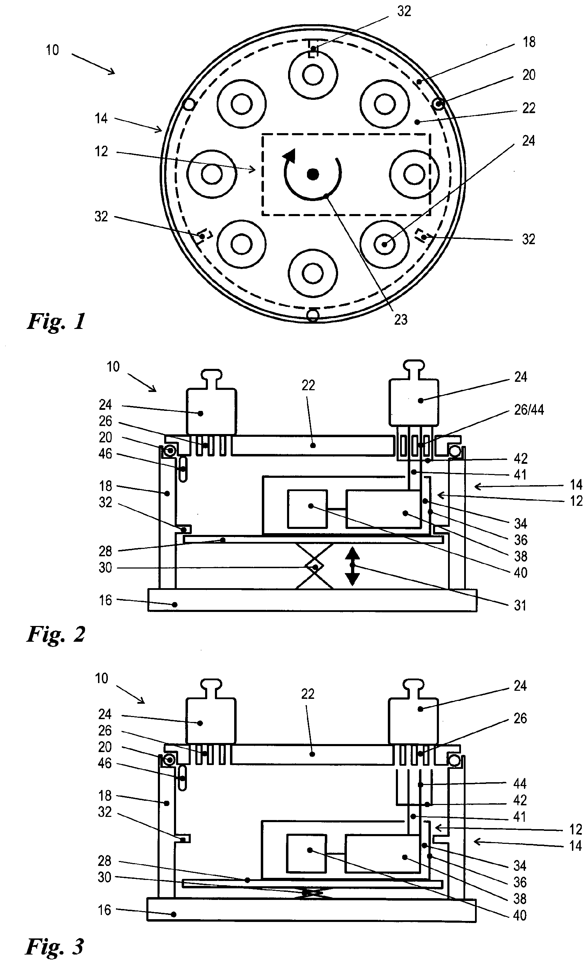

Die Figuren 1-3, die nachfolgend gemeinsam diskutiert werden sollen, zeigen in stark schematisierter Darstellung eine Ausführungsform einer erfindungsgemäßen Vorrichtung 10, umfassend eine Waage 12 und eine Lastwechseleinheit 14.

Auf einer gemeinsamen Basis 16 ist ein Gestell festgelegt, welches bspw. als ein Gestänge oder Gehäuse ausgebildet sein kann. Bei der dargestellten Ausführungsform ist das Gestell als ein Trommelgehäuse 18 ausgebildet. An seinem oberen Rand trägt das Trommelgehäuse 18 ein 3-Punkt-Drehtellerlagerung 20, auf welcher ein Drehteller 22 rotierbar gelagert ist. Die Rotierbarkeit des Drehtellers 22 ist in Figur 1 durch den Rotationspfeil 23 angedeutet. Der Drehteller 22 dient als Magazin für Prüfgewichte 24, die bei der gezeigten Ausführungsform gleichmäßig über seinen Umfang verteilt an vorbestimmten Positionen auf dem Drehteller 22 positioniert sind. Die vorbestimmten Positionen der Prüfgewichte 24 zeichnen sich insbesondere durch Gruppen von Vertikaldurchbrüchen 26 durch den Drehteller 22 hindurch aus. Die Durchbrüche können bspw. spalt- oder rundlochförmig ausgestaltet sein. Bei der gezeigten Ausführungsform bestehen die den Prüfgewichten 24 zugeordneten Durchbruchsgruppen jeweils aus einer Mehrzahl von Vertikaldurchbrüchen. Denkbar sind jedoch auch Ausführungsformen, bei denen wenigstens eine der Durchbruchsgruppen aus lediglich einem hinreichend großen Vertikaldurchbruch 26 besteht. Auf die Bedeutung der Vertikaldurchbrüche 26 soll weiter unten noch näher eingegangen werden.

Unterhalb des Drehtellers 22 ist eine Hubeinrichtung 28 angeordnet, die bei der gezeigten Ausführungsform nach Art einer Hebebühne mit einem Scherenhub 30 ausgebildet ist. Die Hubeinrichtung 28 ist, wie durch den Verschiebepfeil 31 in Figur 2 angedeutet, vertikal verfahrbar, wobei in Figur 2 eine hier als Wägeposition bezeichnete, angehobene Stellung und in Figur 3 eine hier als Wechselposition bezeichnete, abgesenkte Stellung gezeigt ist. An der Innenwandung des Trommelgehäuses 18 ist ein Anschlag 32 angeordnet, gegen welches die Hubeinrichtung 28 in ihrer Wägeposition mit einem nicht im Detail dargestellten Gegenanschlag anschlägt. Die Wägeposition der Hubeinrichtung ist somit durch den Anschlag 32 exakt definiert.

Auf der Hubeinrichtung 28 ist die Waage 12 angeordnet. Diese umfasst eine Wägezelle 34, die bei der gezeigten Ausführungsform ein Gehäuse 36 umfasst, in dessen Innerem ein mechanisches Wägesystem 38 und eine entsprechende Regelelektronik 40 angeordnet sind. Details des Wägesystems und der Regelelektronik, die bevorzugt nach dem Prinzip der elektromagnetischen Kompensation arbeiten, allerdings auch basierend auf dem Dehnmessstreifen- oder einem anderen Wägeprinzip beruhen können, sind in den Figuren nicht gezeigt und haben auch für die vorliegende Erfindung keine weitergehende Relevanz. Das Wägesystem 38 ist über ein Lasteinleitungselement 41 mit einer Lastaufnahme 42 gekoppelt, die zur Aufnahme einer Last dient, für die mittels der Wägezelle 34 ein Gewichtswert ermittelt werden soll. Die Lastaufnahme 42 weist eine Trägeranordnung 44 auf, die bei der gezeigten Ausführungsform als eine Mehrzahl vertikal orientierter Finger ausgebildet ist, deren Größe und Position mit den Vertikaldurchbrüchen 26 jeder Durchbruchsgruppe des Drehtellers 22 korrespondieren. Mit anderen Worten können bei korrekter Winkelpositionierung des Drehtellers 22 die Finger der Trägeranordnung 44 durch die Vertikaldurchbrüche 26 hindurchgreifen.

Dies ist in der in Figur 2 gezeigten Wägeposition der Hubeinrichtung 28 der Fall. Hier ragen die Finger der Trägeranordnung 44 berührungslos durch die Vertikaldurchbrüche 26 des Drehtellers 22 hindurch und heben das darauf positionierte Prüfgewicht 24 an. Folglich ruht die Last des angehobenen Prüfgewichtes 24 auf der Lastaufnahme 42 und wird in das Wägesystem 38 der Wägezelle 34 eingeleitet, sodass ein entsprechender Gewichtswert bestimmt werden kann. In der in Figur 3 gezeigten Wechselposition hingegen ist die Trägeranordnung 44 vollständig unterhalb der Vertikaldurchbrüche 26 positioniert, sodass der Drehteller 22 frei rotieren und eine anderes Prüfgewicht 24 über der Lastaufnahme 42 in Position bringen kann. Zum Antrieb des Drehtellers 22 ist bei der gezeigten Ausführungsform ein als Reibradantrieb ausgebildeter, motorischer Umfangsantrieb vorgesehen. Ein solcher Umfangsantrieb hat im Vergleich zu einem grundsätzlich auch anwendbaren, zentrischen Antrieb den Vorteil, dass innerhalb des Trommelgehäuses 18 ein größerer Bauraum für die Wägezelle 34 und die Hubeinrichtung 28 zur Verfügung steht.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist die erfindungsgemäße Vorrichtung, die besonders bevorzugt als Komparator Verwendung findet mit allen dem Fachmann bekannten und zukünftig noch zu entwickelnden Details bezüglich des Wägesystems 38, der Steuerelektronik 40, der Hubeinrichtung 28, der Drehteller-Lagerung 20, der Zentrierung der Prüfgewichte 24 auf dem Drehteller 22 bzw. auf der Trägeranordnung 44 ausstattbar.

### Bezugszeichenliste

- 10: Vorrichtung
- 12: Waage
- 14: Lastwechseleinrichtung
- 16: Basis
- 18: Trommelgehäuse
- 20: Drehtellerlagerung
- 22: Drehteller
- 23: Rotationspfeil
- 24: Prüfgewicht
- 26: Vertikaldurchbruch in 22
- 28: Hubeinrichtung
- 30: Scherenhub
- 31: Vertikalverstellpfeil
- 32: Anschlag
- 34: Wägezelle
- 36: Gehäuse
- 38: Wägesystem
- 40: Regelelektronik
- 41: Lasteinleitungselement
- 42: Lastaufnahme
- 44: Trägeranordnung
- 46: Reibradantrieb

## Patentansprüche

1. Waage mit Lastwechseleinrichtung,
wobei die Lastwechseleinrichtung (14) einen horizontal bewegbar gelagerten Magazintisch mit einer Mehrzahl von gruppenweise angeordneten Vertikaldurchbrüchen (26) aufweist und
die Waage (12) eine Wägezelle (34) und eine Lastaufnahme (42) mit einer zu jeder Durchbruchsgruppe des Magazintischs korrespondierenden Trägeranordnung (44) aufweist
und wobei der Magazintisch und die Waage (12) relativ zueinander höhenverstellbar sind, sodass in einer Wägeposition eine über der Lastaufnahme (42) positionierte Durchbruchsgruppe des Magazintischs von der Trägeranordnung (44) der Lastaufnahme (42) durchgriffen und in einer Wechselposition die Trägeranordnung (44) der Lastaufnahme (42) tiefer als die Vertikaldurchbrüche (26) des Magazintischs positioniert ist,
**dadurch gekennzeichnet, dass**
der Magazintisch relativ zu einer Basis (16) höhenfest gelagert und die Waage (12) relativ zu der Basis (16) höhenverstellbar ist,
wobei der Hub der Waage (12) durch einen relativ zu der Basis (16) höhenfesten Anschlag (32) nach oben begrenzt ist.

2. Vorrichtung nach Anspruch 1 ,
**dadurch gekennzeichnet,**
**dass** der Magazintisch als ein horizontal rotierbar gelagerter Drehteller (22) ausgebildet ist, über dessen Umfang verteilt die Durchbruchsgruppen angeordnet sind.

3. Vorrichtung nach Anspruch 1 ,
**dadurch gekennzeichnet,**
**dass** der Magazintisch als eine horizontal linearverschieblich gelagerte Verschiebebühne ausgebildet ist, über deren Fläche verteilt die Durchbruchsgruppen angeordnet sind.

4. Vorrichtung nach einem der vorangehenden Ansprüche,
**dadurch gekennzeichnet,**
**dass** der Anschlag (32) oder ein höhenfest zu der Waage fixierter Gegenanschlag mit einer Kraftmesseinrichtung versehen ist.

5. Vorrichtung nach einem der vorangehenden Ansprüche,
**dadurch gekennzeichnet,**
**dass** die Waage (12) auf einer ersten motorischen Hubeinrichtung (28) angeordnet oder mit einer ersten motorischen Hubeinrichtung versehen ist.

6. Vorrichtung nach Anspruch 5,
**dadurch gekennzeichnet,**
**dass** die erste motorische Hubeinrichtung (28) mit einer kraftgesteuerten Abschaltung versehen ist.

7. Vorrichtung nach einem der vorangehenden Ansprüche,
**dadurch gekennzeichnet,**
**dass** der Magazintisch mit einem motorischen Antrieb versehen ist.

8. Vorrichtung nach einem der vorangehenden Ansprüche,
**dadurch gekennzeichnet,**
**dass** die Lastaufnahme gegenüber der Wägezelle mittels einer zweiten motorischen Hubeinrichtung höhenverstellbar ist, wobei sie in einer angehobenen Stellung von dem Wägesystem der Wägezelle entkoppelt und in einer abgesenkten Stellung mit dem Wägesystem der Wägezelle gekoppelt ist.

9. Verfahren zum Betrieb einer Waage (12) mit Lastwechseleinrichtung (14) nach einem der Ansprüche 1 bis 7, wobei auf dem Magazintisch verteilt mehrere Prüfgewichte (24) jeweils über einer zugeordneten Durchbruchsgruppe positioniert sind, umfassend die Schritte:
- Bewegen des Magazintischs, bis ein ausgewähltes Prüfgewicht (24) über der Lastaufnahme (42) der sich in Wechselposition befindlichen Waage (12) positioniert ist,
- Anheben der Waage (12) bis zum Durchgriff der Trägeranordnung (44) durch die dem Prüfgewicht (24) zugeordnete Durchbruchsgruppe und zur Anlage der Trägeranordnung (44) am Prüfgewicht (24),
- weiteres Anheben der Waage (12) zusammen mit dem auf der Trägeranordnung (44) ihrer Lastaufnahme (42) aufliegenden Prüfgewicht (24) bis zur Anlage des Anschlags (32) an einem höhenfest zu der Waage (12) fixierten Gegenanschlag,
- Ermitteln eines Gewichtswertes für das Prüfgewicht (24) und
- Absenken der Waage (12) in die Wechselposition.

10. Verfahren zum Betrieb einer Waage mit Lastwechseleinrichtung nach Anspruch 8, wobei auf dem Magazintisch verteilt mehrere Prüfgewichte jeweils über einer zugeordneten Durchbruchsgruppe positioniert sind, umfassend die Schritte:
- Bewegen des Magazintischs, bis ein ausgewähltes Prüfgewicht über der sich in ihrer mittels der zweiten motorischen Hubeinrichtung angehobenen Stellung befindlichen Lastaufnahme der sich in Wechselposition befindlichen Waage positioniert ist,
- Anheben der Waage bis zum Durchgriff der Trägeranordnung durch die dem Prüfgewicht zugeordnete Durchbruchsgruppe und zur Anlage der Trägeranordnung am Prüfgewicht,
- weiteres Anheben der Waage zusammen mit dem auf der Trägeranordnung ihrer Lastaufnahme aufliegenden Prüfgewicht bis zur Anlage des Anschlags an einem höhenfest zu der Waage fixierten Gegenanschlag,
- Überführen der Lastaufnahme, mittels der zweiten motorischen Hubeinrichtung, in ihre abgesenkte Stellung,
- Ermitteln eines Gewichtswertes für das Prüfgewicht und
- Absenken der Waage in die Wechselposition.

## Claims

1. A balance having a load change device,
wherein the load change device (14) has a magazine table which is mounted so as to be horizontally movable and has a plurality of vertical openings (26) arranged in groups, and
the balance (12) has a weighing cell (34) and a load receptacle (42) having a carrier arrangement (44) corresponding to each group of openings in the magazine table,
and wherein the magazine table and the balance (12) are height-adjustable relative to one another, with the result that a group of openings in the magazine table positioned above the load receptacle (42) in a weighing position is penetrated by the carrier arrangement (44) of the load receptacle (42), and the carrier arrangement (44) of the load receptacle (42) is positioned lower than the vertical openings (26) in the magazine table in a changing position,
**characterized in that**
the magazine table is mounted at a fixed height relative to a base (16), and the balance (12) is height-adjustable relative to the base (16),
wherein the travel of the balance (12) is upwardly limited by a stop (32) which is at a fixed height relative to the base (16).

2. The apparatus according to claim 1, **characterized in that** the magazine table is designed as a rotary plate (22) mounted so as to be horizontally rotatable, over whose circumference the group of openings is arranged distributed.

3. The apparatus according to claim 1, **characterized in that** the magazine table is designed as a shifting platform mounted so as to be horizontally linearly displaceable, over whose surface the group of openings are arranged distributed.

4. The apparatus according to any of the preceding claims, **characterized in that** the stop (32) or a counter stop fixed in height to the balance is provided with a force measurement device.

5. The apparatus according to any of the preceding claims, **characterized in that** the balance (12) is arranged on a first motorized lifting device (28) or is provided with first motorized lifting device.

6. The apparatus according to claim 5, **characterized in that** the first motorized lifting device (28) is provided with a force-controlled shutdown.

7. The apparatus according to any of the preceding claims, **characterized in that** the magazine table is provided with a motorized drive.

8. The apparatus according to any of the preceding claims, **characterized in that** the load receptacle is height-adjustable with respect to the weighing cell, wherein in a raised position of the weighing system of the weighing cell it is decoupled and in a lowered position of the weighing system of the weighing cell it is coupled.

9. A method for operating a balance (12) having a load change device (14) according to any of claims 1 to 7, wherein a plurality of test weights (24) distributed on the magazine table are each positioned via an associated group of openings, comprising the steps:
- movement of the magazine table until a selected test weight (24) is positioned above the load receptacle (42) of the balance (12) in changing position,
- raising the balance (12) to the access of the carrier arrangement (44) through the group of openings associated with the test weight (24) and to the contact of the carrier arrangement (44) on the test weight (24),
- further raising the balance (12) together with the test weight (24) lying on the carrier arrangement (44) of its load receptacle (42) to the contact of the stop (32) on a counter stop fixed in height to the balance (12),
- determining a weight value for the test weight (24) and
- lowering the balance (12) to the changing position.

10. The method for operating a balance having a load change device according to claim 8, wherein a plurality of test weights distributed on the magazine table are each positioned via an associated group of openings, comprising the steps:
- movement of the magazine table until a selected test weight is positioned above the load receptacle of the balance in changing position,
- raising the balance to the access of the carrier arrangement through the group of openings associated with the test weight and to the contact of the carrier arrangement on the test weight,
- further raising the balance together with the test weight lying on the carrier arrangement of its load receptacle to the contact of the stop on a counter stop fixed in height to the balance,
- passing over the load receptacle by means of the second motorized lifting device, to its lowered position,
- determining a weight value for the test weight and
- lowering the balance to the changing position.

## Revendications

1. Balance avec dispositif de changement de charge,
dans lequel le dispositif de changement de charge (14) présente une table de magasin montée de manière mobile horizontalement avec une pluralité de passages verticaux (26) disposés par groupes et
la balance (12) présente une cellule de pesée (34) et un dispositif de réception de charge (42) avec un ensemble support (44) correspondant à chaque groupe de passages de la table de magasin
et dans laquelle la table de magasin et la balance (12) sont réglables en hauteur l'une par rapport à l'autre, de sorte que dans une position de pesée, un groupe de passages de la table de magasin positionné au-dessus du dispositif de réception de charge (42) est traversé par l'ensemble support (44) du dispositif de réception de charge (42) et, dans une position de changement, l'ensemble support (44) du dispositif de réception de charge (42) est positionné plus en profondeur que les passages verticaux (26) de la table de magasin,
**caractérisée en ce que**
la table de magasin est montée à une hauteur fixe par rapport à une base (16) et la balance (12) est réglable en hauteur par rapport à la base (16),
dans laquelle la course de la balance (12) est limitée vers le haut par une butée (32) qui est à une hauteur fixe par rapport à la base (16).

2. Dispositif selon la revendication 1,
**caractérisé en ce**
**que** la table de magasin est réalisée sous la forme d'un plateau tournant (22) monté rotatif horizontalement, sur la périphérie duquel les groupes de passages sont disposés de manière répartie.

3. Dispositif selon la revendication 1,
**caractérisé en ce**
**que** la table de magasin est réalisée sous la forme d'une plateforme mobile montée de manière à se déplacer linéairement horizontalement, sur la surface de laquelle les groupes de passages sont disposés de manière répartie.

4. Dispositif selon l'une quelconque des revendications précédentes,
**caractérisé en ce**
**que** la butée (32) ou une contre-butée fixée à une hauteur fixe par rapport à la balance est pourvue d'un dispositif de mesure de force.

5. Dispositif selon l'une quelconque des revendications précédentes,
**caractérisé en ce**
**que** la balance (12) est disposée sur un premier dispositif de levage (28) motorisé ou pourvue d'un premier dispositif de levage motorisé.

6. Dispositif selon la revendication 5,
**caractérisé en ce**
**que** le premier dispositif de levage motorisé (28) est pourvu d'un dispositif de mise hors circuit commandé de façon assistée.

7. Dispositif selon l'une quelconque des revendications précédentes,
**caractérisé en ce**
**que** la table de magasin est pourvue d'un entraînement motorisé.

8. Dispositif selon l'une quelconque des revendications précédentes,
**caractérisé en ce**
**que** le dispositif de réception de charge est réglable en hauteur par rapport à la cellule de pesée au moyen d'un deuxième dispositif de levage motorisé, dans lequel, dans une position levée, il est découplé du système de pesée de la cellule de pesée et, dans une position abaissée, il est accouplé au système de pesée de la cellule de pesée.

9. Procédé pour faire fonctionner une balance (12) avec dispositif de changement de charge (14) selon l'une quelconque des revendications 1 à 7, dans lequel plusieurs poids de contrôle (24) sont positionnés de manière répartie sur la table de magasin respectivement par l'intermédiaire d'un groupe de passages associé,
comprenant les étapes :
- de déplacement de la table de magasin, jusqu'à ce qu'un poids de contrôle (24) sélectionné soit positionné au-dessus du dispositif de réception de charge (42) de la balance (12) se trouvant dans la position de changement,
- de levage de la balance (12) jusqu'à la traversée de l'ensemble support (44) à travers le groupe de passages associé au poids de contrôle (24) et jusqu'à l'appui de l'ensemble support (44) contre le poids de contrôle (24),
- de levage supplémentaire de la balance (12) conjointement avec le poids de contrôle (24) reposant sur l'ensemble support (44) de son dispositif de réception de charge (42) jusqu'à l'appui de la butée (32) contre une contre-butée fixée à une hauteur fixe par rapport à la balance (12),
- de détermination d'une valeur de poids pour le poids de contrôle (24) et
- d'abaissement de la balance (12) dans la position de changement.

10. Procédé pour faire fonctionner une balance avec le dispositif de changement de charge selon la revendication 8, dans lequel plusieurs poids de contrôle sont positionnés de manière répartie sur la table de magasin respectivement par l'intermédiaire d'un groupe de passages associé,
comprenant les étapes :
- de déplacement de la table de magasin, jusqu'à ce qu'un poids de contrôle sélectionné soit positionné au-dessus du dispositif de réception de charge, se trouvant dans sa position levée au moyen du deuxième dispositif de levage motorisé, de la balance se trouvant dans la position de changement,
- de levage de la balance jusqu'à la traversée de l'ensemble support à travers le groupe de passages associé au poids de contrôle et jusqu'à l'appui de l'ensemble support contre le poids de contrôle,
- de levage supplémentaire de la balance conjointement avec le poids de contrôle reposant sur l'ensemble support de son dispositif de réception de charge jusqu'à l'appui de la butée contre une contre-butée fixée à une hauteur fixe par rapport à la balance,
- d'amenée du dispositif de réception de charge, au moyen du deuxième dispositif de levage motorisé, dans sa position abaissée,
- de détermination d'une valeur de poids pour le poids de contrôle et
- d'abaissement de la balance dans la position de changement.
